Europäisches Patentamt

European Patent Office

Office européen des brevets

(19)

(11) Veröffentlichungsnummer: **0 427 021 A2**

# (12) EUROPÄISCHE PATENTANMELDUNG

(21) Anmeldenummer: 90119921.6

(22) Anmeldetag: 17.10.90

(51) Int. Cl.⁵: **G02B 27/02**, G02B 17/00

(30) Priorität: 07.11.89 DE 3937074

(43) Veröffentlichungstag der Anmeldung:
15.05.91 Patentblatt 91/20

(84) Benannte Vertragsstaaten:
CH DE FR GB LI SE

(71) Anmelder: **Siemens Aktiengesellschaft**
**Wittelsbacherplatz 2**
**W-8000 München 2(DE)**

(72) Erfinder: **Huber, Walter**
**Josef-Schauer-Strasse 13**
**W-8039 Puchheim(DE)**

(54) **Optikmodul.**

(57) Die Erfindung betrifft ein Optikmodul zur Erzeugung einer Abbildung mittels Auflicht im Dunkelfeld, wobei die für einen SMD-Bestückautomaten notwendigen geringen Einbaumaße erfüllt werden. Dies geschieht durch den Einsatz eins Spiegelschachtes (6) und durch gezielte Positionierung der Lichtquellen (81, 82) mit der Wirkung, daß spiegelnd reflektierende und senkrecht zur optischen Achse (3) liegende Oberflächen vom Objekt (4) oder von dahinterliegenden Maschinenteilen (11) für den Sensor (1) dunkel erscheinen.

FIG 2

EP 0 427 021 A2

## OPTIKMODUL

Die Erfindung betrifft ein Optikmodul mit mindestens einem Sensor und mindestens einem Objektiv auf einer optischen Achse zur Erzeugung einer Abbildung eines Objektes mittels Auflicht im Dunkelfeld, insbesondere zur automatischen Prüfung der zweidimensionalen Lage von SMD-Bauelementen (surface mounted device) an einem Bestückautomaten.

Bei der Bestückung von Leiterplatten mit elektronischen Bauelementen wird hauptsächlich die SMD-Technik angewandt. Die elektronischen Bauelemente, die im wesentlichen aus einem Grundkörper und elektrischen Anschlußbeinchen bestehen, besitzen allgemein bekannte geometrische Formen. Die Handhabung dieser Bauelemente geschieht mit einem Bestückautomaten und darin beispielsweise durch eine Saugpipette, wobei die Saugpipette auf dem Körper des Bauelementes von oben aufsetzt und durch Anlegen eines Vakuums dieses ansaugt und festhält. In diesem Zustand sind die elektrischen Anschlußbeinchen, mit denen das Bauelement auf eine Leiterplatte gelötet wird, in der Regel nach unten, also in Gegenrichtung zur Saugpipette, positioniert. Mit dieser Konstellation wird das Bauelement zu verschiedenen Bearbeitungsstationen verfahren, an denen es bearbeitet, d.h. positioniert, elektrisch oder mechanisch geprüft oder in einer anderen Form vermessen wird. Es ist üblich, derartige Bearbeitungen an einem Bestückautomaten automatisch durchzuführen.

Die Ausrüstung der Bestückautomaten mit mehreren Bearbeitungsstationen hat zu einer hohen Packungsdichte geführt. Für die einzelnen Bearbeitungsstationen steht nur ein begrenzter Raum zum Einbau zur Verfügung, wobei zusätzlich bestimmte Bedingungen für den Bewegungsablauf erfüllt sein müssen.

Für die zweidimensionale Lageerkennung des von einer Saug pipette gehaltenen Bauelementes wird dieses mittels eines Objektives und eines Sensors, beispielsweise einer Halbleiterkamera, von der der Saugpipette gegenüberliegenden Seite her betrachtet. Über eine Bildauswertung kann dann durch Drehen der Saugpipette das daran gehaltene Bauelement in seine korrekte oder gewünschte Lage gebracht werden.

Die zur Betrachtung eines Bauelementes mittels eines Optikmodules nötige Beleuchtung des Bauelementes ist durch die vorgegebenen geringen Einbauräume schwierig auszuführen. Insbesondere für eine gewünschte Beleuchtung mit Auflicht im Dunkelfeld wird übernormal viel Platz benötigt. Bei dieser Art von Beleuchtung wird seitlich, d.h. senkrecht zu einer optischen Achse des Optikmodules und in einem bestimmten Winkel zur Objektebene in Richtung des Objektives aus der Objektebene heraus Platz für die Positionierung der Lichtquellen benötigt.

Der Erfindung liegt die Aufgabe zugrunde, ein Optikmodul zur Abbildung eines Objektes auf einem Sensor mittels Auflichtbeleuchtung im Dunkelfeld zur Verfügung zu stellen, bei dem neben der Erfüllung der Kriterien für das Dunkelfeld die Breite bzw. der Durchmesser des Optikmodules wesentlich verringert wird.

Die Lösung dieser Aufgabe wird durch den kennzeichnenden Teil des Anspruches 1 wiedergegeben.

Der Erfindung liegt die Erkenntnis zugrunde, daß die Reduzierung des Einbauraumes für ein Optikmodul durch den Einsatz eines Spiegelschachtes mit innenliegenden Spiegeln durchführbar ist. Die Dunkelfeldbeleuchtung, die in der Regel bei ausreichendem Platz einfach ausführbar ist, wird bei dem Einsatz eines Spiegelschachtes durch eine bestimmte relative Ausrichtung der jeweiligen Lichtquelle in Bezug auf den Spiegelschacht, das Objekt und das Objektiv ermöglicht. Der annahernd rotationssymmetrisch zu einer optischen Achse ausgebildete und ausgerichtete Spiegelschacht ist zwischen Sensor und Objektiv auf der einen Seite und Objekt auf der anderen Seite plaziert. Sämtliche Bauteile liegen annähernd auf der optischen Achse und sind so ausgerichtet, daß eine Abbildung erzeugt werden kann. Durch den Einsatz des Spiegelschachtes kann eine steile und eine flache Beleuchtung des Objektes erzielt werden. Ganz allgemein kann eine Abbildung eines Objektes mit Auflicht und reflektierendem Hintergrund erfaßt werden.

Eine besondere Ausgestaltung der Erfindung sieht den Einsatz eines Spiegelschachtes mit einem quadratischen Querschnitt vor. Hierbei ist jeweils eine Lichtquelle einer Spiegelfläche des Lichtschachtes zugeordnet. Diese geometrische Form des Spiegelschachtes entspricht der üblicherweise im Grundriß quadratischen oder rechteckigen Form der Bauelemente.

Zur homogenen Ausleuchtung und zur Erzeugung einer genügenden Lichtstärke werden die Lichtquellen zeilenförmig und parallel zur zugehorigen Spiegelfläche ausgebildet und ausgerichtet.

Der Einsatz von flächenförmigen Lichtquellen bietet weitere Vorteile bezüglich einer homogenen Ausleuchtung.

In einer vorteilhaften Ausgestaltung der Erfindung können spiegelnde Auflichtreflexionen durch den Hintergrund des Objektes durch den Einsatz einer spiegelnd reflektierenden Scheibe abgeschirmt werden.

Im folgenden wird anhand der drei schematischen Figuren ein Ausführungsbeispiel beschrieben.

Figur 1 zeigt eine prinzipielle Darstellung einer Auflichtbeleuchtung im Dunkelfeld.

Figur 2 zeigt ein Optikmodul mit einem Spiegelschacht 6 mit der prinzipiellen Positionierung der Lichtquellen 81, 82.

Figur 3 zeigt ein Optikmodul 6 mit der Möglichkeit einer seitlichen Positionierung einer Lichtquelle 830 unter Einsatz eines halbdurchlässigen Spiegels 7.

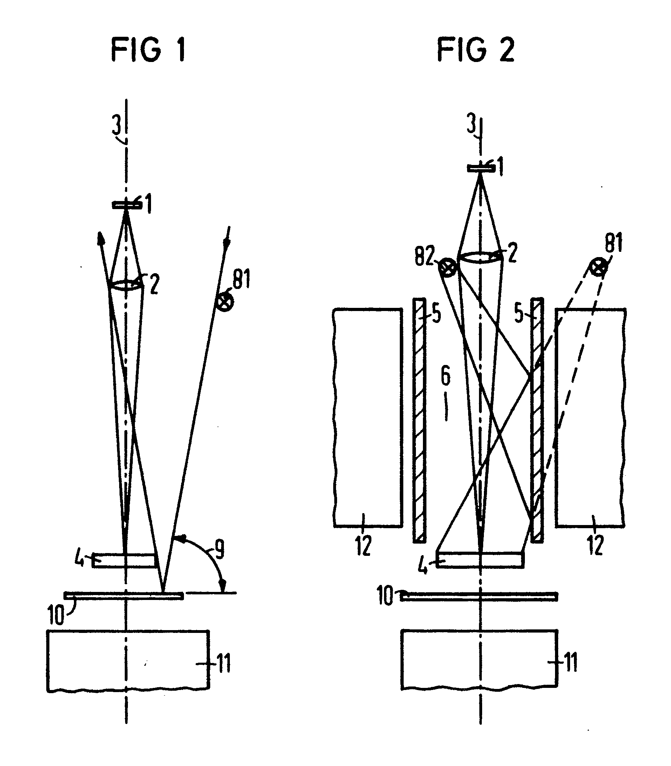

In der Figur 1 ist prinzipiell dargestellt, wie mittels eines Sensors 1 und eines Objektives 2 ein Objekt 4 auf dem Sensor 1 abgebildet werden kann. Die einzelnen Bauteile sind auf der optischen Achse 3 in der dargestellten Reihenfolge angeordnet. Die Beleuchtung geschieht mittels einer Lichtquelle 81, für deren Positionierung ein Maximalwert des Winkels 9 maßgebend ist. Der hier dargestellte Zusammenhang betrifft nicht nur die Auflichtbeleuchtung des Objektes 4 im Dunkelfeld, sondern beinhaltet auch die Abschirmung störender spiegelnder Auflichtreflexionen von Maschinenteilen 11 durch den Einsatz einer zwischengeschalteten Scheibe 10, die spiegelnd reflektiert. Somit wird ein Winkel 9 nicht an die Objektebene angelegt, sondern an die Ebene der Scheibe 10. Die Lichtquelle 81 muß derart positioniert sein, daß der äußerst mögliche Lichtstrahl, der durch Pfeile angedeutet ist, nach seiner Reflexion an der Scheibe 10 höchstens den äußeren Rand des Objektives 2 streift, aber nicht in dieses hinein reflektiert wird. Es gilt, einen Maximalwert des Winkels 9 nicht zu überschreiten. Die Positionierung der Lichtquelle 81 ist demnach rechts von dem angedeuteten Lichtstrahl, bevor er an der Scheibe 10 reflektiert wird, möglich. Damit ist die niedrigste Beleuchtungsapertur größer, als die Beobachtungsapertur (Objektivapertur). Es kann nur gebeugtes Licht in das Objektiv eintreten und die Beugungsorte erscheinen hell auf dunklem Grund. Unter dieser Voraussetzung erscheinen spiegelnde Reflexionen dunkel.

In der Figur 2 ist mit der Lichtquelle 81 die ideale Beleuchtung des Objektes 4 mit den bisher genannten Voraussetzungen wiedergegeben. Da allerdings durch seitlich positionierte Maschinenteile 12 eine Beschränkung des Einbauraumes für das Optikmodul vorliegt, ist eine Verschiebung der Lichtquelle 81 zum Ort der Lichtquelle 82 unter Verwendung des Lichtschachtes 6 durchgeführt worden. Der Lichtschacht 6 besteht aus Spiegeln 5, deren Spiegelflächen nach innen gerichtet sind. Die Beleuchtung des Objektes 4 mittels der Lichtquelle 82 entspricht, nach der Reflexion am Spiegel 5, der Beleuchtung durch die ideale Lichtquelle 81. Die auch hier dargestellte Scheibe 10 ist als Abschirmung für Störreflexe von Maschinenteilen 11 vorgesehen.

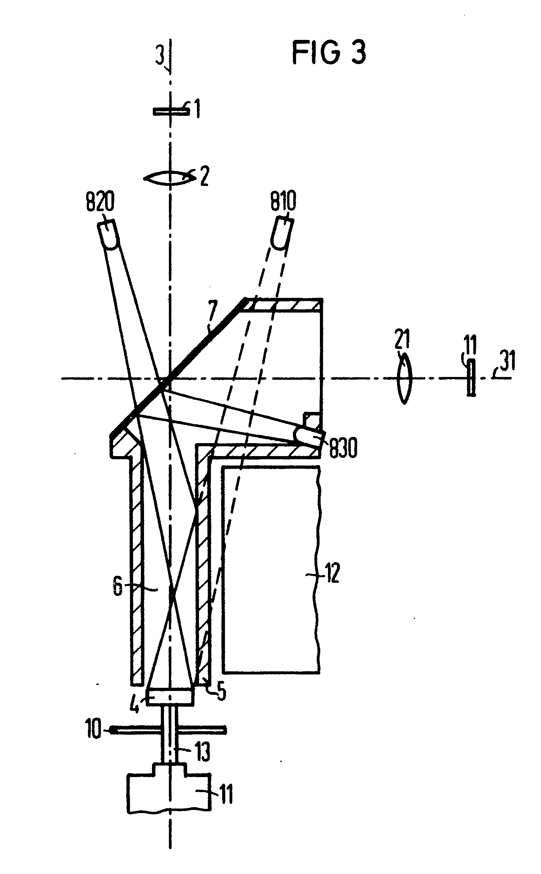

In der Figur 3 ist ein Maschinenteil 11 dargestellt, das beispielsweise ein Teil eines Revolverkopfes sein kann. Damit verbunden ist eine Saugpipette 13, die das Objekt 4, beispielsweise ein SMD-Bauelement, an seiner Oberseite mittels Vakuum hält. Saugpipette 13 und Objekt 4 können zusammen gedreht werden. Die Scheibe 10 kann an der Saugpipette 13 oder am Maschinenteil 11 befestigt sein. Die Beleuchtung geschieht in diesem Fall durch die Lichtquelle 830, wobei Leuchtdioden oder Diodenzeilen eingesetzt werden. Die ideale Positionierung ist durch die Lichtquelle 810 gegeben, die jedoch aufgrund einer störenden Kante von Maschinenteilen 12 nicht durchführbar ist. Die Abänderung der Position der Lichtquelle 81 zur Position der Lichtquelle 82, wie in Figur 2 gezeigt, entspricht hier dem Wechsel von der Lichtquelle 810 zur Lichtquelle 820. Die Positionierung der Lichtquelle 830 zusammen mit dem Sensor 110 und dem Objektiv 21 stellt eine zusätzliche Reduzierung des Einbaumaßes des Optikmodules dar. Die Beleuchtung des Objektes 4 ist in jedem Fall so ausgeführt, daß nach der Spiegelung der Lichtstrahlen einer Lichtquelle 830 am Spiegel 7 und an einem parallel zur optischen Achse 3 stehenden Spiegel 5 die gleichen Verhältnisse wie bei der Beleuchtung mittels der Lichtquelle 810 mit idealen Voraussetzungen, d.h. ohne störende Maschinenteile 12, vorliegen.

Durch den Einsatz eines Spiegelschachtes 6 wird der Einbauraum wesentlich reduziert. Bei gleichzeitiger Verwendung einer Scheibe 10, die als Spiegel oder auch als Absorptionsfilter ausgeführt sein kann, werden vom Hintergrund erzeugte Störreflexe abgeschirmt. Schachtkanten können in Verbindung mit Spiegeln als Blenden für Störreflexe benutzt werden. Die über Objektiv 2 auf dem Sensor 1 bzw. über Objektiv 21 auf dem Sensor 110 hell erscheinenden Teile des Objektes 4 werden im wesentlichen durch diffuse Reflexionen erzeugt.

Das Gesichtsfeld ist zumindest vom Anstellwinkel der einzelnen Spiegel 5 des Lichtschachtes 6 bezüglich der optischen Achse 3 und vom Abstand zwischen Objekt 4 und Lichtschacht 6 abhängig. Da jedoch die Ausführung einfach gestaltet werden soll, wird der Spiegelschacht 6 in der Regel mit quadratischem Querschnitt und mit parallelen Spiegeln 5 ausgeführt. Der Abstand zwischen dem Ende des Spiegelschachtes 6 und dem Objekt 4 ist durch die gegenseitige Verfahrbarkeit, in der Regel durch Rotation des Maschinenteiles 11 mit dem Objekt 4 über die Saugpipette 13 um eine nicht dargestellte Achse vorgegeben. Zur Verbesserung der Positionierung des Objektes 4, beispielsweise einem SMD-Bauelement, kann die Scheibe 10 als Code-Scheibe ausgelegt werden. Dabei enthält sie Strichmarkierungen, aufgrund derer eine bestimmte Verdrehung von Saugpipette 13 und Bauelement 4 festgestellt werden kann. Hierbei ist eine Ausführung möglich, bei der ein weiterer, nicht in den Figuren dargestellter Sensor die Strichmarkierung auf der Code-Scheibe erkennt. Die Scheibe 10 muß in diesem Fall für die Beleuchtung von diesem Sensor durchlässig sein.

Hierbei ist die Scheibe 10 für einen bestimmten Spektralbereich, z.B. beim sichtbaren Licht, spiegelnd reflektierend oder absorbierend. Für einen anderen Spektralbereich, z.B. infrarotes Licht, ist sie durchlässig.

**Ansprüche**

1. Optikmodul mit mindestens einem Sensor (1) und mindestens einem Objektiv (2) auf einer optischen Achse (3) zur Erzeugung einer Abbildung eines Objektes (4) mittels Auflichtbeleuchtung im Dunkelfeld, insbesondere zur automatischen Prüfung der zweidimensionalen Lage von oberflächenbestückbaren Bauelementen an einem Bestückautomaten,

**gekennzeichnet durch,**

- mindestens einen annähernd rotationssymmetrisch zur optischen Achse (3) ausgerichteten Spiegelschacht (6) mit innenliegenden Spiegeln (5), wobei Objektiv (2) und Objekt (4) jeweils an gegenüberliegenden Seiten des Spiegelschachtes (6) annähernd auf der optischen Achse (3) plaziert sind,
- mindestens eine am Eingang des Spiegelschachtes (6) plazierte Lichtquelle (81,82) zur Beleuchtung des Objektes (4), wobei spiegelnd reflektierende und senkrecht zur optischen Achse (3) liegende Oberflächen vom Objekt (4) oder von dahinterliegenden Maschinenteilen (11) für den Sensor (1) dunkel erscheinen.

2. Optikmodul nach Anspruch 1,

**dadurch gekennzeichnet,**

daß der Spiegelschacht (6) einen quadratischen Querschnitt und vier jeweils einer Spiegelfläche des Spiegelschachtes (6) zugeordnete Lichtquellen (81,82) aufweist.

3. Optikmodul nach Anspruch 2,

**dadurch gekennzeichnet,**

daß zeilenförmige und parallel zu den Spiegelflächen ausgerichtete Lichtquellen (81,82) eingesetzt werden.

4. Optikmodul nach Anspruch 1 oder 2,

**dadurch gekennzeichnet,**

daß flächenförmige Lichtquellen (81,82) eingesetzt werden.

5. Optikmodul nach einem der vorhergehenden Ansprüche,

**dadurch gekennzeichnet,**

daß zwischen dem Objekt (4) und dahinterliegenden Maschinen teilen (11) eine spiegelnd reflektierende oder absorbierende Scheibe (10) senkrecht zur optischen Achse (3) zur Vermeidung von reflektiertem Störlicht der Maschinenteile (11) angeordnet ist.

# FIG 1

# FIG 2

FIG 3